(19)

Europäisches
Patentamt
European
Patent Office
Office européen
des brevets

(11) **EP 1 242 841 B1**

(12) **EUROPEAN PATENT SPECIFICATION**

(45) Date of publication and mention
of the grant of the patent:
**20.02.2008 Bulletin 2008/08**

(21) Application number: **00993544.6**

(22) Date of filing: **04.12.2000**

(51) Int Cl.:
*G02B 6/44* (2006.01)      *H02G 1/08* (2006.01)

(86) International application number:
**PCT/EP2000/012219**

(87) International publication number:
**WO 2001/046735 (28.06.2001 Gazette 2001/26)**

(54) **METHOD FOR INSTALLING OPTICAL FIBRES OR CABLES IN A TUBE USING A FLUID UNDER PRESSURE**

VERFAHREN ZUM INSTALLIEREN VON LICHTWELLENLEITERN ODER KABELN IN EIN ROHR MITTELS EINES FLUIDS UNTER DRUCK

PROCEDE D'INSTALLATION DE FIBRES OPTIQUES OU DE CABLES DANS UN TUBE A L'AIDE D'UN FLUIDE SOUS PRESSION

(84) Designated Contracting States:
**AT BE CH CY DE DK ES FI FR GB GR IE IT LI LU MC NL PT SE TR**

(30) Priority: **21.12.1999 NL 1013901**

(43) Date of publication of application:
**25.09.2002 Bulletin 2002/39**

(73) Proprietor: **Koninklijke KPN N.V.**
**9726 AE Groningen (NL)**

(72) Inventor: **GRIFFIOEN, Willem**
**NL-2461 XJ Ter Aar (NL)**

(74) Representative: **Wuyts, Koenraad Maria**
**Koninklijke KPN N.V.,**
**Intellectual Property Group,**
**P.O. Box 95321**
**2509 CH Den Haag (NL)**

(56) References cited:
| | |
|---|---|
| **EP-A- 0 287 225** | **EP-A- 0 292 037** |
| **EP-A- 0 318 280** | **EP-A- 0 475 815** |
| **EP-A- 0 508 016** | **EP-A- 0 785 387** |
| **US-A- 4 691 896** | |

- **PATENT ABSTRACTS OF JAPAN vol. 015, no. 139 (E-1053), 9 April 1991 (1991-04-09) & JP 03 018206 A (SUMITOMO ELECTRIC IND LTD), 25 January 1991 (1991-01-25)**

**Description**

The invention relates to a method for installing optical fibres or cables in a tubular section comprising a supply tube and an installation tube, each having an input and an output, the output of the supply tube being connected to the input of the installation tube, a fluid under pressure being fed near the input of the supply tube, and the cable being conducted into the input of the supply tube, and being propelled through the tubular section by fluid entraining forces.

Such a method is disclosed, e.g., in EP-A-0 108 590. In this method, an optical cable is conducted into the tube by way of mechanical force, particularly by way of a pair of pressure rolls. To prevent loss of pressure, the input of the tube or of the device is provided, by way of pressure rolls, with a sealing preventing the escape of fluid along the cable or fibre. The pressure rolls serve to overcome the pressure difference between the environment and the space where the fluid pressure is prevailing upon introduction of the cable. In EP-A-0 292 037, a similar method is disclosed, the pressure rolls exercising a force on the cable which exceeds the one required to overcome the pressure difference. With the additional pushing power, a greater installation length may be achieved than with only the entraining force of a fluid, particularly in the event of thicker cables.

For overcoming the force required to introduce the cable into the space where the fluid pressure is present, it is also known to make use of a fluid flowing with increased velocity over a first part, viewed from the input, of the tube length. Exercising mechanical forces, such as in the event of thin or vulnerable fibres or cables, is undesirable on account of the possibility of mechanical damage.

In EP-A-0 345 043 it is disclosed to feed the pressure to the leg of a T-shaped coupling piece, the ongoing portion of the T receiving the cable at one end, and at the other end being connected to a supply tube extending over a relatively modest length, e.g., 1m, into the installation tube and having a diameter which is 0.1 to 0.8 times the diameter of the installation tube. In the narrow supply tube, the velocity of the fluid flow is a great deal higher than in the installation tube, as a result of which the required tensile force is generated. A drawback of said solution is that a relatively large portion of the total pressure difference between the input and the output of the installation tube acts on the narrow supply tube, so that either the pressure must be chosen very high for sufficient residual pressure to remain for the actual installation, or the installation length is restricted. The first case often encounters practical, safety and cost problems, and the second is always undesirable, unless the installation is effected over a modest length only.

In EP-A-0 287 225 a method is disclosed, an additional flow rate of the fluid over an initial portion of the installation tube being realised as well. Here, the diameter of the installation tube is the same as the one of the supply tube, and the latter is in fact part of the installation tube. The additional fluid flow is realised by, at the end of the supply tube, where it changes into the installation tube, blowing off part of the fluid by way of an adjustable valve. Said solution has the problem that the velocity of the fluid in the supply tube soon achieves the velocity of sound. In the event of air as a fluid, and a supply tube having a length of several metres, such may already be the case. When achieving the velocity of sound, the energy of the fluid is no longer converted into entraining forces on the cable but into acceleration of the fluid itself.

An additional problem, larger in practise, is that a relatively thin cable in a relatively wide supply tube with respect to said cable, in the event of a high fluid velocity will soon start to twist, so-called buckling, as a result of which the cable will prematurely stick in the tube and can no longer be propelled by the fluid. In the event of narrow supply tubes, such drawback does not exist, but the drawbacks mentioned earlier do.

In JP-A-03018206 and corresponding patent abstract No. 139 (E-1053) of Patent Abstracts of Japan vol. 015 (9 April 1991) it is disclosed to install a cable in a tubular pathway by means of the flow of a pressurised fluid. The tubular pathway includes two installation tubes coupled by means of a specific tube connecting element. The connecting element leads/guides, during installation, a moving cable from an output of a first tube to an input of the second tube. In the connecting element the fluid flow leaving the output of the first tube is separated from the cable and led to a compressor for being pressurised again, and the thus re-pressurised fluid flow is led to the input of the second installation tube in behalf of the installation of the cable in the second installation tube. In such a case, however, the propelling forces exerted on the cable in the first installation tube are often for a considerable part lost in friction, just because of the length of the first installation tube, because of bends and undulations in this tube and because of buckling of the propelled cable, and therefore cannot be effective to overcome the pressure difference experienced by the cable upon entering the second installation tube. Moreover the above-described problems continue to exist for the introduction of the cable at the input of the first installation tube.

The object of the invention is to provide for a method enabling the installation of an optical fibre or cable using a fluid, a fluid flow also being applicable for overcoming the pressure difference between the space outside the installation tube and the inside thereof, the fluid flow, over a first portion of the tubular section, having a higher velocity than over the remaining portion of the installation section, without the problems described above occurring.

For this purpose, a method of the aforementioned kind, in which, as disclosed in the above-discussed document EP-A-0 287 225, at the output of the supply tube, at least part of the fluid from the supply tube is discharged, is according to the invention characterised in that, at the input of the installation tube, a further fluid, hereinafter called second fluid is fed under pressure, the length of the supply tube being small enough to prevent that an appreciable part of propelling forces, generated as a result of the fluid entraining forces exerted by the first mentioned fluid, hereinafter called first fluid, on the cable in the supply tube, is lost in friction.

The invention also provides for a device for installing optical fibres or cables in a tubular section comprising a supply tube and an installation tube, each having an input and an output, the output of the supply tube being in connection with the input of the installation tube, means being provided for, near the input of the supply tube, feeding a fluid under pressure, and for means to conduct the cable into the input of the supply tube, the cable being propelled through the tubular section by fluid entraining forces, and, at the output of the supply tube, means being provided to discharge at least part of the fluid from the supply tube, characterised in that means are provided for feeding, at the input of the installation tube, a further fluid, hereinafter called second fluid, under pressure, and that the length of the supply tube is small enough to prevent that an appreciable part of propelling forces, generated as a result of the fluid entraining forces exerted by the first mentioned fluid, hereinafter called first fluid, on the cable in the supply tube, is lost to friction.

The length of the supply tube should remain thus limited in order not to loose any appreciable part of the propelling forces on the cable in the supply tube to friction (which is proportional to the length of the supply tube and even more than proportional when bends and undulations appear in the supply tube and when the cable has space to buckle). A short supply tube is also practical in case a first portion of the cable has to be inserted at first, by hand, or by inertia of the moving cable (e.g. in a transition from a previous installation tube to a next installation tube).

Essentially, the fluid is preferably completely discharged from the supply tube. In addition, the fluids for the supply tube and the installation tube preferably come from one and the same source.

The supply tube or tubes may be removed after installation of the cable, but may also be maintained for later use, e.g. for removing the cable and replacing it by another cable.

Below, the invention will be explained in more detail on the basis of exemplary embodiments with reference to the drawing. Therein:

FIG. 1 shows a schematic view of an installation for, using a fluid under pressure, installing a cable into a tube according to a first prior art;

FIG. 2 shows a schematic view of an installation for, using a fluid under pressure, installing a cable into a tube according to a second prior art;

FIG. 3 shows a schematic view of an installation for, using a fluid under pressure, installing a cable into a tube according to a first aspect of the invention;

FIG. 4 shows a schematic view of an installation for, using a fluid under pressure, installing a cable into a tube according to a second aspect of the invention;

FIG. 5 shows a schematic view of an installation for, using a fluid under pressure, installing a cable into a tube according to a third aspect of the invention;

FIG. 6 shows a schematic view of an installation for, using a fluid under pressure, installing a cable into a tube according to a fourth aspect of the invention;

FIG. 7 shows a schematic view of an installation for, using a fluid under pressure, installing a cable into a tube according to a fifth aspect of the invention;

FIG. 8 shows a schematic view of an installation for, using a fluid under pressure, installing a cable into a tube according to a sixth aspect of the invention; and

FIG. 9 shows a schematic view of an installation for, using a fluid under pressure, installing a cable into a tube according to a specific example.

In the figures, corresponding parts are designated by the same reference numeral.

Furthermore, the following notation is used in the description of the figure:

$D_c$ = cable diameter;
$D_d$ = internal diameter of the installation tube;
$D_p$ = internal diameter of the supply tube;
$I_p$ = length of the supply tube;
$I_d$ = length of the installation tube.

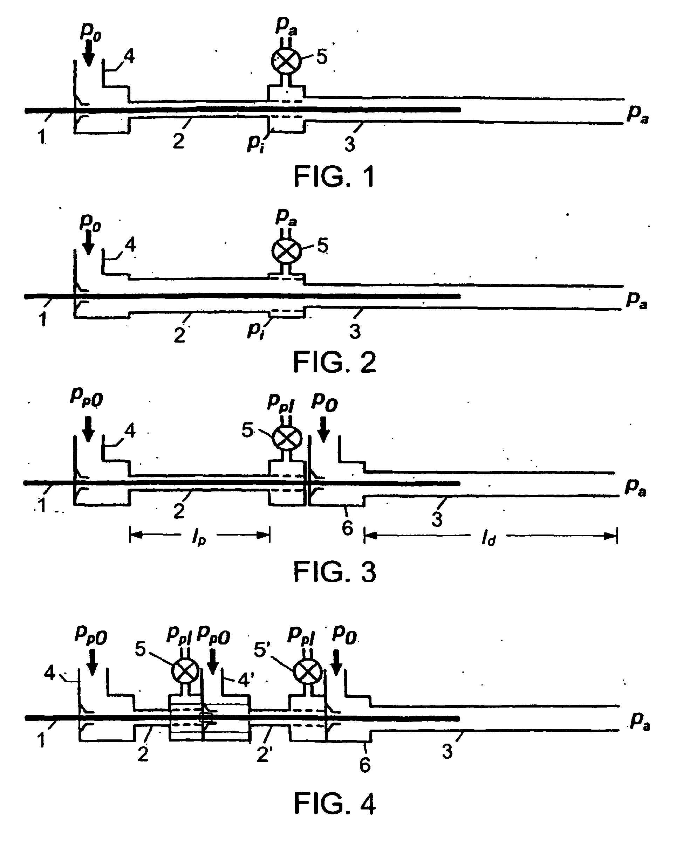

FIG. 1 shows an installation for introducing a cable 1 by way of a supply tube 2 into an installation tube 3. By way of a connection 4, a fluid, e.g., air, is fed under pressure. Part of said fluid is blown off at the end of the supply tube 2 by way of a valve 5. An installation of this type is described in EP-A-0 287225. In the event of said installation, the diameter of the supply tube is the same as the one of the installation tube. Below, it will be investigated to what extent the ratio of said two diameters affects the installation process.

EP-A-0 108 950 describes that, if a cable having a diameter of $D_c$ is blown into a tube having a diameter of $D_d$,

the total blowing force of $F_b$ at a pressure difference of $\Delta p$ is given by:

$$F_b = \frac{\pi}{4} D_d D_c \Delta p \qquad (1)$$

This formula is only valid when the speed of the fluid is kept below the speed of sound in that fluid.

The hydrostatic force $F_{hs}$ which must be overcome to introduce the cable into the pressure space over a pressure drop of $\Delta p$ then is:

$$F_{hs} = \frac{\pi}{4} D_c^2 \Delta p \qquad (2)$$

From (1), (2) and FIG. 1, for a pressure of $p_0$ at the input side near connection 4, an atmospheric pressure $p_a$ at the output of the installation tube, and beyond the valve 5, and an intermediate pressure at the location of the valve 5, which is set to $p_i$, it may be derived that the hydrostatic force $F_{hs}$ in the supply tube 2 having a diameter of $D_p$ is at least cancelled out if:

$$\frac{\pi}{4} D_c D_p (p_0 - p_i) \geq \frac{\pi}{4} D_c^2 (p_0 - p_a)$$

or:

$$p_i \leq \frac{(D_p - D_c)p_0 + D_c p_a}{D_p} \qquad (3)$$

Note that this condition only results in an effective insertion of the cable into the installation tube when the supply tube is short enough so that the propelling forces in the supply tube are not lost in friction.

A supply tube which is relatively narrow with respect to the cable diameter of $D_c$ gives a relatively high flow velocity, and therefore a relatively large pressure drop over a short piece of tube is feasible, provided the velocity remains sufficiently below the velocity of sound, without air needing to be discharged by way of valve 5. A large portion of the pressure, however, is "consumed" to overcome the hydrostatic pressure.

Example: A cable having a diameter of $D_c$ = 3 mm must be blown into a tube having a diameter of $D_d$ = 5.5 mm. A supply tube having a diameter of $D_p$ = 4 mm makes a pressure of $p_0$ drop from 10 bar (absolute) to a $p_i$ of only 3.25 bar.

In order to retain a good deal of the pressure to blow into the cable, it is precisely a wider supply tube which is desired, as is shown in FIG. 2. Now, partially blowing off the fluid is certainly required to develop sufficient entraining forces over a short length. If, e.g., a diameter of $D_p$ = 15 mm is chosen, an amply sufficient pressure of $p_i$ = 8.2 bar will remain to blow into the cable. Here, however, the problems described above with respect to buckling and exceeding the velocity of sound by the flowing fluid do arise.

From formulas (1), (2) and FIG. 3, which shows an exemplary embodiment according to the invention, a separate fluid under pressure being fed to the installation tube by way of the input of an engaging piece 6 which is coupled to the installation tube 3, it may now be derived that the pressure drop in the supply tube 2 is at least cancelled out if:

$$\frac{\pi}{4} (D_c D_p - D_c^2)(p_{p0} - p_{pi}) \geq \frac{\pi}{4} D_c^2 (p_0 - p_a)$$

or:

$$p_{p0} - p_{p1} \geq \frac{D_c(p_0 - p_a)}{D_p - D_c}$$

or:

$$D_p \geq \frac{(p_{p0} - p_{p1}) + (p_0 - p_a)}{p_{p0} - p_{p1}} D_c \qquad (4)$$

where:

$p_{p0} =$ the pressure at the input of the supply tube,
$p_{p1} =$ the pressure of the discharge opening of the supply tube,
$p_{p0}-p_{p1} =$ the pressure drop over the supply tube, and
$p_0-p_a =$ the pressure drop over the installation tube.

Note again that condition (4) only results in effective insertion of the cable into the installation tube when the length of the supply tube is small enough so that the propelling forces in the supply tube are not lost in friction.
The <u>net</u> pushing force $F_{push}$ of the "flow motor", i.e., the supply tube, then is:

$$F_{push} = \frac{\pi}{4}(D_c D_p - D_c^2)(p_{p0} - p_{p1}) \qquad (4a)$$

For $p_{p0} = p_0$ and $P_{p1} = p_a$, condition (4) becomes:

$$D_p \geq 2D_c \qquad (4b)$$

In the event of a diameter of the supply tube 2 which is twice as large as the one of the cable 1, the complete pressure therefore is still available for blowing in. If for the supply tube a larger pressure is used than for blowing in, the diameter of the supply tube may be reduced still further. This may also, as is shown in FIG. 4, be achieved by applying several supply tubes 2, 2' in cascade, there being completely blown off, by way of valves 5, 5', at the end of each supply tube.
For n cascaded supply tubes, there may be derived a more general version of condition 4 for the internal diameter $D_p$ of the supply tubes. Said more general condition reads:

$$D_p \geq \frac{((p_{p0} - p_{p1}) + (p_0 - p_a)/n)}{p_{p0} - p_{p1}} D_c \qquad (4')$$

For the diameter of the supply tubes, it applies more in general, under the same pressure conditions as for condition 4b, that $D_p \geq (1 + 1/n) D_c$.
The problems occurring in the installation methods described with reference to figures 1 and 2 may therefore be overcome with the method according to the invention by a suitable dimensioning of the supply tube. Since the previous formulas and conditions are in fact independent of the length of the supply tube, this length can be chosen suitably short, i.e. $l_p \ll l_d$, but not too short in order to keep the fluid flow velocity sufficiently below the velocity of sound in the fluid applied (see the Examples below).

A further advantage obtained by the invention is that it is possible to work with different fluids, since the supply tube is disconnected from the installation tube. There may therefore be applied a fluid having a higher viscosity in the supply tube. As a result, the flow rate in the supply tube may be restricted still further and in addition very short lengths may be achieved, as a result of which the probability of buckling may in fact be excluded.

An example of a fluid for application in the supply tube is hydraulic liquid. If the sealing between the supply tube and the pressure space in the engaging piece 6 in FIG. 3 or 4, which is coupled to the tube to be installed, is not complete, then part of the fluid from the supply tube may be introduced together with the cable. In this case, the liquid for the supply tube must be compatible with cable and tube material and, in addition, not adversely affect the friction coefficient between cable and tube. A safer fluid for the supply tube is water or, better still, a lubricant. This may be the same lubricant as the one used when installing the cable. In this manner, the lubricant may even be applied beautifully evenly. If it is undesirable that fluid comes from the supply tube into the installation tube, the cable may be wiped clean in the space between the supply tube and said pressure space.

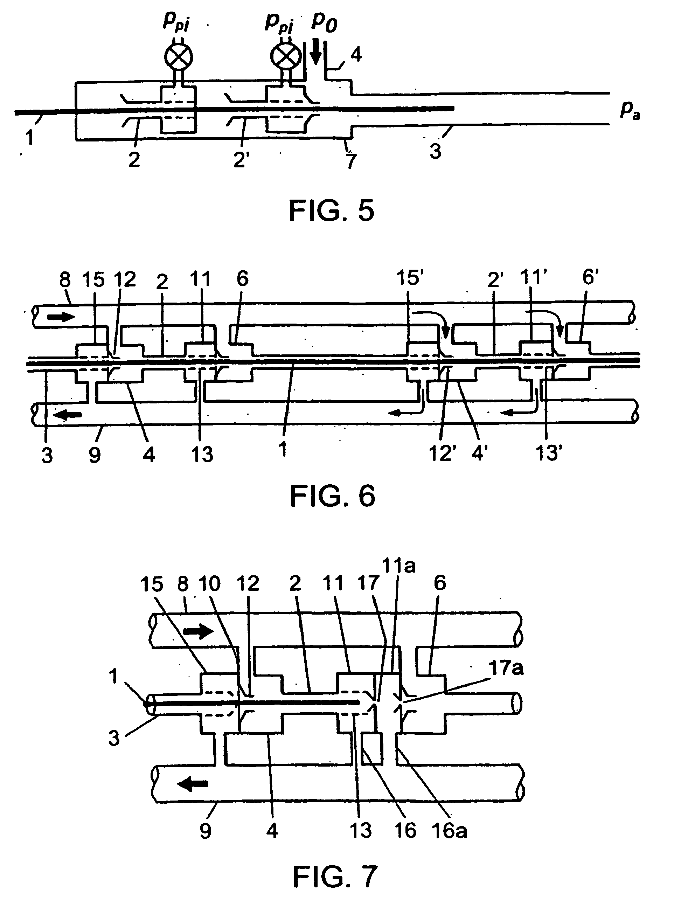

FIG. 5 shows a special embodiment. Here, the supply tubes 2, 2' are placed inside an engaging piece 7. Such is particularly advantageous if there are cascaded engaging pieces, and the fluid may be directly obtained from the pressure space within the engaging piece.

It is also feasible to apply several cascaded loose supply tubes 2, 2', distributed over a section, such as is shown in FIG. 6. Said supply tubes each deliver a slight pushing force and operate as "flow motors". If there are many in a row, in this way an even distribution of the pushing forces may be achieved. Flow in the tube between the "flow motors" is still present, but not critical. It is therefore also possible to use narrow installation tubes. The feed and discharge of both the "flow motors" and the installation tubes may be taken care of through tubes 8 and 9 which lie along the installation tubes 3. Said feed and discharge tubes may have a larger diameter than the installation tube, so that a small pressure drop may be achieved over the first-mentioned tubes. In addition, various installation tubes may be operated from the tubes 8 and 9. A reduction of the dimensions of a bundle of installation tubes may be effectively realised in this manner.

FIG. 6 shows a cable 1 being installed in a tube 3. Several "flow motors" are cascaded to effect the propulsion of the cable 1. The heart of a flow motor is the supply tube 2, 2'. In such tube, a fluid flows with a velocity in excess of the one of cable 1. The fluid is fed by way of a feed tube 8 and discharged by way of a tube 9. The engaging piece 4 forms the connection between feed tube 8 and supply tube 2. The disconnecting piece 11 forms the connection between supply tube 2 and discharge tube 9. In the coupling pieces 4 and 11, bulkheads 12 and 13 respectively, provide for the cable 1 not being pressed too much against the wall. For the installation tube 3, engaging pieces 6, 6' and disconnecting pieces 15, 15' are used, which have their input and discharge from and into, respectively, the tubes 8 and 9.

The application with cascaded "flow motors" particularly offers advantages if a cable already runs through said "motors". If the cable is still to be introduced, each time upon entering into the supply tube a counterforce for overcoming the pressure drop will be experienced. This is compensated only if the cable has penetrated far enough into the supply tube. There are solutions, however, to this problem:

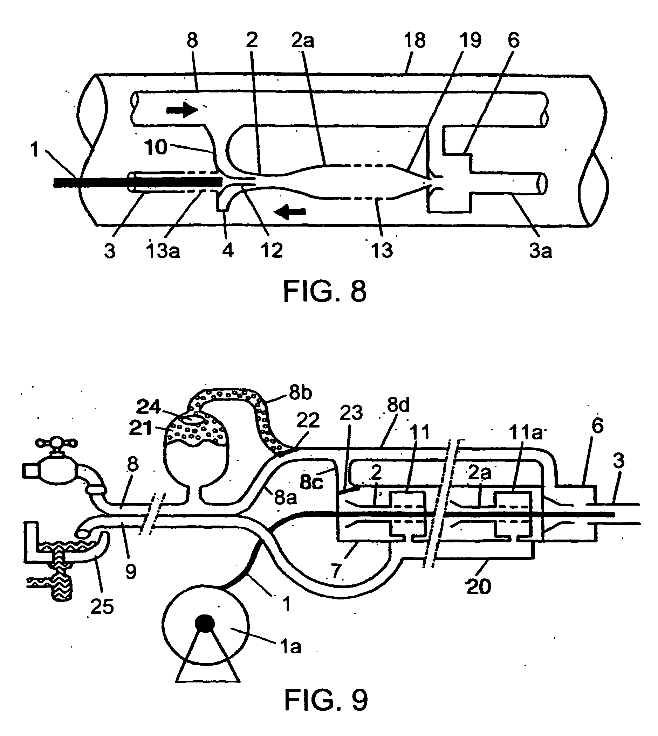

- Making use of a previously installed pulling rope.
- Providing the supply tube with a venturi, such as in EP-A-0 318 280, (see the description of FIG. 8 below) or of an input piece generating a so-called coanda spiral flow, as is described in EP-A-0 508 016.
- Applying a supply tube having a great discharge leak, in such a manner that there is hardly any pressure built up, and the cable may therefore enter easily. Only at the end of the supply tube, the leak is plugged by the cable blocking the leak (see the description following below of FIG. 7).

FIG. 7 shows a cable 1 being installed in a tube 3. Only one of the "flow motors", with which the propulsion of the cable 1 is realised, is shown. The heart of a flow motor once again is the supply tube 2 having a fluid therein flowing with a velocity in excess of the one of cable 1. The fluid is fed by way of feed tube 8 and discharged by way of discharge tube 9. The connection 10 to the engaging piece 4 now is a somewhat narrower tube. The dimensions are such that "in operation" (see later) the flowing fluid may achieve sufficient velocity to exercise sufficient propelling force onto the cable. Initially, the discharge flow, by way of the supply tube 2, is the disconnecting piece 11a, through which the larger part of the medium flows, and a tube 16a, which forms a connection between the disconnecting piece 11a and the discharge tube 9, is so large that by way of the narrow tube 10 there is hardly built up any pressure in connecting piece 4. The cable 1 may then easily be conducted into the flow motor. While filling the supply tube 2 with cable 1, the pressure already starts to increase somewhat, but the cable 1 also receives an entraining force over an ever larger length. Once it has arrived at the opening 17, between the disconnecting pieces 11 and 11a, the pressure suddenly becomes even higher. After all, the cable 1 fits essentially precisely into the opening 17, so that the flow towards disconnecting piece 11a is now blocked. The discharge flow now runs by way of disconnecting piece 11 and by way of a narrower tube 16. Now, the situation has been achieved that the "flow motor" works normally. In the connecting pieces 4 and 11, bulkheads 12 and 13, respectively, once again provide for the cable 1 not being pressed too hard against the wall. For the feed and the discharge, respectively, of the fluid towards or from the installation tube, engaging piece 6 and disconnecting piece 15 are used, which have their feed and discharge in the same tubes 8 and 9.

FIG. 8 shows a cable 1 which is installed in a tube 3 and furthermore in a tube 3a. One of the "flow motors" is shown, with which the propulsion of the cable 1 is realised. The heart of a flow motor once again is the supply tube 2/2a, in which a fluid is flowing having a velocity larger than the one of the cable 1. The fluid is again fed by way of a feed tube 8. By way of connecting tube 10, which has such a course that no turbulence causing an additional flow resistance occurs, the fluid is introduced into the coupling piece 4. Here, the fluid is conducted evenly into a supply tube 2 designed as a venturi. The diameter of tube 2 is much smaller than the one of feed tube 8, namely, so much smaller that the velocity of the fluid increases so much that the pressure becomes so much lower (according to Bernoulli) that it effectively becomes about equal to the one at the end of tube 3. There is then no longer any pressure drop at the point where the cable 1 enters the coupling piece 4. Upon the input, the cable 1 is shielded, by the shielding bulkhead 12, from fast-flowing fluid in the transverse direction. In the supply tube 2, the heart of the venturi, an entraining force is exercised on the cable 1. The same also occurs in the conically broadening part 2a of the supply tube. In tube portion 2a, the velocity of the fluid is once again gradually reduced, and simultaneously the pressure increases again. The dimensioning should be such that the cable 1, when running through tube portion 2a, has built up sufficient entraining forces to be capable of compensating at any rate the pressure drop at the input in the coupling piece 4. This may be determined, e.g., by simulation or by trial and error. At the bulkheads 13 of the "disconnecting piece" of the supply tube, the fluid is discharged once again. The net pushing power of the "flow motor" is the built-up entraining force in tube portions 2 and 2a, and in the "disconnecting piece" having bulkheads 13. It is possible to have the bulkheads 13 run straight over a more extended section, before the fluid is discharged. The discharge of the fluid is now directly outwards, however, within a protection tube 18. The protection tube 18 which enwraps the installation tubes 3, 3a and the feed tube 8, in this case serves as a return channel. The cable 1 is conducted through a conic end 19 of the "disconnecting piece" having bulkheads 13 into the continuation piece 3a of the installation tube 3. The conic end 19, after passing through of cable 1, may form a close sealing between the "flow motor" and tube 3a. For the installation tube, coupling piece 6 is used, which obtains its feed from the feed tube 8. The installation tube has its discharge to protection tube 18 by way of a same type of bulkhead 13a as at the disconnecting piece of the supply tube.

EXAMPLE 1

A small cable having a diameter $D_c$ of 3 mm, a weight W of 0.1N/m and a rigidity B of 0.01 Nm$^2$ is installed in a tube having a diameter $D_d$ of 4 mm and having a friction coefficient f = 0.2 between tube and cable. Blowing in with a pressure of 10 bar (absolute) and an additional pushing force of 10 N is possible over a distance of 518 m (standard section, each time having a right-angle curve after 200 m). With water as a fluid, a length of 1078 m may be attained. Without additional pushing, a length of 1005 m is still attained. When, however, the force for overcoming the pressure drop at the cable input is not compensated, said length decreases strongly.

For the embodiment according to FIG. 1, in the event of equal $D_p$ and $D_d$ in the supply tube, a large part of the available pressure is required to compensate the input force, leaving only a $p_i$ = 3.25 bar at the beginning of the installation tube. This is why a much larger $D_p$ = 15 mm must be chosen. From condition (3), there then follows a $p_i \leq 8.2$ bar.

If, for said geometry, air is applied as a fluid, at a length of the supply tube which is restricted to several metres, the velocity of sound is exceeded. The energy of the air flow in that case is dissipated by a shock wave, and not by the entraining effect on the small cable. Therefore, a liquid must be applied, e.g., water. The velocity of the liquid is limited to several dozens of metres per second and the volume flow to several litres per second.

The drawback of a supply tube having a large diameter - cable buckling - is still present. With the embodiment according to FIG.3, said problem is solved and with the one according to FIG. 4, still better. From condition (4), upon equal input and output pressure at the supply tube and the installation tube, there follows a diameter $D_p$ = 6 mm for the supply tube, with the embodiment according to FIG.3. For the embodiment according to FIG.4 a diameter $D_p$ of 4.5 and 4 mm follows for 2 and 3 cascaded supply tubes, respectively.

For the embodiment of FIG. 3 and 4, larger diameters are then feasible for the installation tube, the supply tube simply remaining equal. With the embodiment according to FIG. 1, such is definitely unthinkable.

EXAMPLE 1a

Cables are flown (using water as a fluid) into installation tubes (guide tubes) having the same dimensioning as in Example 1, which tubes are installed as a bundle in a protection tube. Flowing refers to 1005m per unit. To attain 4 km, therefore, 4 units in cascade are required, with a relative separation of 1000 m between each other. Said units may be fed using a separate feed tube, while the output is possible either separately, as in FIG. 7, or through the protection tube (as in FIG. 8, but not necessarily with a tube implemented as a venturi). The diameter of the feed tube must be larger than the one of the installation tubes, in order to restrict the pressure losses over the feed tubes; for the protection tube, such is already automatically the case. If, e.g., the diameter of the feed tube is just as large as the one of the installation tube, over a feed length of 1000 m, up to the first flow motor, for the same flow rate in the installation tube as in Example 1, the entire available pressure would already have been consumed in the feed process. The pressure gradient in the feed tube fortunately decreases rapidly with increasing diameter. In the event of the volume rate remaining equal, the pressure gradient is inversely proportional to $D_d^{19/4}$, $D_d$ in this case relating to the internal diameter of the feed tube (see Appendix A below). A diameter of 6 mm already suffices and, using a somewhat larger diameter, e.g., of 8 mm, several installation tubes may also be simultaneously excited.

The method described above may be applied using, e.g., the following steps. First lay a protection tube having, e.g., a length of 4 km and a diameter of 50/40 mm (externally/internally). Subsequently blow in a bundle of tubes, consisting of 1 (feed) tube having a diameter of 10/8 mm and 12 (installation) tubes having a diameter of 5/4 mm, using the method as described in EP-A-0 785 387. After installation of the bundle of tubes, the protection tube must be opened, e.g., each 1000 m. In the open spots, "flow motors" as shown in FIG. 8 may now be mounted between the installation tubes and be connected to the supply tube. Thereafter, the protection tube is closed again. This may be effected through previously shifted tube pieces having a larger diameter and the required couplings, or using divisible housings which may be placed after the "flow motors". After said actions, the cables may be flown in. It is also feasible, with one feed tube, to feed flow motors which are connected to parallel installation tubes.

EXAMPLE 2

A cable having a diameter $D_c$ of 10 mm is installed into a tube having any diameter through a method according to FIG. 3 (in the installation tube, installation is preferably effected using compressed air having a pressure of about 7-10 bar, as in EP-A-0 292 037). Installation using a liquid, e.g., water, is of course also possible. The supply tube has a diameter $D_p$ of 14 mm. As a result, a lubricant, such as, e.g., Polywater, having a dynamic viscosity p of 2 Pa, is allowed to flow at a pressure $p_{p0}$ of 50 bar. According to (4a), said "flow motor" delivers a force of 154 N, sufficient as a mechanical force when pushing/blowing according to EP-A-0 292 037. At a length lp of 50 cm, from formulas (5) and (6) there follows a volume flow $\Phi_v$ of 2 l/s and a velocity v of 26 m/s. The liquid, therefore, flows considerably faster than the cable (condition for delivering the entraining force) and a volume flow of 2 l/s may be delivered using conventional pumps. In this situation, the flow is turbulent, as was assumed in the calculations.

In order to prevent a possibly too large generation of heat in the lubricant for said combination of flow rate and pressure difference, it may be necessary to take measures for this purpose, e.g., conducting the flow of Polywater through a cooled heat exchanger before it is returned to the pump. In addition, the volume flow may still be reduced by choosing a narrower supply tube. In such case, it is necessary to cascade various supply tubes in the flow motor. In spite of said cascading, the total of the volume flow becomes smaller with respect to the one at a flow motor having a single supply tube. Including the velocity with which the liquid flows, by the way. This is no objection, however, as long as said velocity remains amply above the velocity of the cable (0.5 to 1 m/s).

EXAMPLE 3

A small cable having a diameter $D_c$ of 3 mm is installed in a tube having any diameter, through a method according to FIG. 5. The supply tubes have a diameter $D_p$ = 3.6 mm. Water is used as a fluid, both for the supply tube and for the installation tube. The pressure $p_{p0}$ equals 6 bar. According to (4a), one "flow motor" delivers a force of 0.71 N. Compensation of the pressure drop when introducing it into the installation tube (also 6 bar) requires 5 units. To compensate for friction losses, it may make sense to use a sixth supply tube. For a length lp = 2.5 cm, from formulas (5) and (6) (see Appendix A) there follows a volume flow $\Phi_v$, = 0.09 1/s per supply tube and a velocity v = 29 m/s. The liquid therefore flows considerably faster than the cable, and a volume flow of 0.55 1/s in total may be delivered by a good (domestic) tap. From formulas (6) and (7), there follows a Reynolds number of 38267; the flow therefore being sufficiently turbulent, as was assumed in the calculations.

If the piping must remain dry such as, e.g., upon installation in a building, an embodiment according to FIG. 4 may also be used, (compressed) air being fed to the installation tube. Likewise, flushing with (compressed) air after installation with water, according to FIG. 5, is possible. In either case, however, the solution loses the advantage that no special provisions are required. Still, flushing with air may also be achieved by utilising the pressure of the water mains by way of a buffer vessel, as in FIG. 9.

FIG. 9 shows an application of Example 3. A cable 1 from a reel la is installed in a tube 3 using water. The water is obtained from a tap and is conducted, by way of feed hose 8, to the housing 7 for the flow motors having supply tubes 2 and 2a. The feed hose 8 is split up into 2 paths, 8a and 8b, the latter of which goes by way of a buffer vessel 21. Initially, path 8b is blocked by tap 22. The enclosed air in the buffer vessel will be compressed by the pressure from the tap, as a result of which the water in the buffer vessel 21 will rise to a specific height. Apart from the housing 7 for the flow motors, the water will also feed the coupling piece 6 which, in FIG. 5, is integrated with the housing 7, to the tube 3. The flow motors having supply tubes 2, 2a discharge their water into tube 20, which runs by way of a discharge hose 9 to, e.g., a washbasin 25. The water from tube 3, which is a much smaller amount, may be caught in, e.g., a bucket. Once the cable 1 is installed, there follows a flushing using air. This is effected by now blocking the path 8a with the tap 22 and opening path 8b. The air in the top of the buffer vessel 21, which is at the same pressure as the water, will then take over the role of the water. To prevent the water from escaping into tube 8b, a float 24 is placed in the top of the buffer vessel 21. In order not to "spill" a large part of the limited amount of air enclosed in the flow motors, housing 7 is closed off with a tap 23.

EXAMPLE 4

An optical fibre having a diameter $D_c$ of 0.25 mm is installed in a tube having any diameter, through a method according to FIG. 3. The supply tube has a diameter $D_p$ = 0.6 mm and a length lp = 10 cm. Air is used as a fluid, both for the supply tube and for the installation tube. The pressures $p_0$ and $p_{p0}$ equal 10 bar. The installation tube has an exhaust at atmospheric pressure $p_a$.

From condition (4) it follows that a pressure difference $p_{p0}$-$p_{p1}$ of at least 6.43 bars is required over the supply tube. This can be obtained by adjusting the pressure $p_{p1}$ at 3.57 bars, using the valve in FIG. 3. From formula 5a it then follows that the maximum speed v, reached at the end of the supply tube at 3.57 bars, equals 271 m/s. This means that the speed is below the speed of sound in air (320 m/s) over the entire length of the supply tube. If the valve in FIG. 3 is opened entirely the speed of sound is exceeded in the last portion of the supply tube (with a pressure below about 3.5 bars). But, the first section is still effective and will continue to supply enough force to overcome the hydrostatic force $F_{hs}$ (formula (2)).

**Appendix A**

In turbulent regime, the pressure gradient dp/dx follows from Blasius, see (5.15) from W. Griffioen, "Installation of optical cables in ducts", Plumettaz, Bex (CH), 1993. For a tube having a diameter $D_p$, this should be read as:

$$\frac{dp}{dx} = -0.24 \frac{\mu^{1/4} \rho^{3/4}}{D_p^{19/4}} \Phi_v^{7/4} \qquad (5)$$

Herein, $\mu$ is the dynamic viscosity (1.8 x $10^{-5}$ Pa for air, 1.1x$10^{-3}$ Pa for water, and 2 Pa for Polywater), $\rho$ is the density (1.3kg/m$^3$ for air at atmospheric pressure, 1000 kg/m$^3$ for water and Polywater) and $\phi_v$ is the volume flow of the flowing medium. If filled with a cable having a diameter of $D_c$, the term $D_p^{19/4}$ in formula (5) must be replaced by

$$D_p^{19/4} \quad \Longrightarrow \quad (D_p - D_c)^{5/4}(D_p^2 - D_c^2)^{7/4} \qquad (6)$$

Formula (5) can be integrated. Using formula (6), and analogously to the derivation of (5.16) from W. Griffioen, "Installation of optical cables in ducts", Plumettaz, Bex (CH), 1993, it follows:

$$v(p) = 1.94 \frac{(D_p - D_c)^{5/7}}{\mu^{1/7}\rho^{3/7}(p/p_a)^{3/7}} \left( \frac{p_0^2 - p_1^2}{lp} \right)^{4/7} \qquad (5a)$$

Herein, v(p) is the speed of the fluid as a function of the pressure p at a certain location in the tube with length 1 and pressure $p_0$ and $p_1$ at the beginning and end of the tube, respectively, and $p_a$ is atmospheric pressure.

The Reynold number Re is defined as:

$$Re = \frac{\rho\, v D_h}{\mu}$$

$$(7)$$

where $D_h$ is the hydraulic diameter, in this case equal to $D_p$ - $D_c$, and v is the volume flow velocity.

For a Reynolds number in excess of 2000, the flow becomes turbulent.

**Claims**

1. Method for installing optical fibres or cables (1) in a tubular section comprising a supply tube (2) and an installation tube (3), each having an input and an output, the output of the supply tube being in connection with the input of the installation tube, a fluid under pressure ($p_{p0}$) being fed near the input of the supply tube, the fibre or cable being conducted into the input of the supply tube and being propelled by fluid entraining forces through the tubular section, and at the output of the supply tube, at any rate part of the fluid being discharged ($p_{p1}$) from the supply tube **<u>characterised in that</u>** at the input of the installation tube, a further fluid, hereinafter called second fluid, under pressure ($p_0$) is fed, the length ($l_p$) of the supply tube being small enough to prevent that an appreciable part of propelling forces, generated as a result of the fluid entraining forces exerted by the first mentioned fluid, hereinafter called first fluid, on the fibre or cable in the supply tube, is lost to friction.

2. Method according to claim 1, **characterised in that** the outputs of the supply tube and the installation tube flow out into the same environment.

3. Method according to claim 1 or 2, **characterised in that** the first fluid fed to the input of the supply tube and the second fluid fed to the input of the installation tube are delivered and pressurised by the same fluid source.

4. Method according to claim 1 or 2, **characterised in that** the first fluid for the supply tube consists of a gas.

5. Method according to claim 4, **characterised in that** the first fluid for the supply tube consists of air.

6. Method according to claim 1 or 2, **characterised in that** the first fluid for the supply tube consists of a liquid.

7. Method according to claim 5, **characterised in that** the first fluid for the supply tube consists of water.

8. Method according to claim 5, **characterised in that** the first fluid for the supply tube consists of hydraulic liquid.

9. Method according to claim 5, **characterised in that** the first fluid for the supply tube consists of a lubricant.

10. Method according to claim 5, **characterised in that** the first fluid for the supply tube consists of a gas compressed to a liquid.

11. Method according to any of the claims 1 to 3 inclusive, **characterised in that** the pressures on the inputs of the supply tube and the installation tube are equal.

12. Method according to claim 1 or 2, **characterised in that** the second fluid flowing through the installation tube consists of air.

13. Method according to claim 1 or 2, **characterised in that** the second fluid flowing through the installation tube consists of water.

14. Method according to any of the claims 1 to 3 inclusive, **characterised in that** the fluid flowing through the installation tube consists of a gas compressed to liquid.

15. Method according to any of the claims 1 to 3 inclusive, **characterised in that** the pressure at the end of the supply tube is greater than, or equal to, the pressure at the start of the installation tube.

**16.** Method according to any of the claims 1 to 15 inclusive, **characterised in that** the pressure drop ($p_{p0}$ - $P_{p1}$) of the first fluid over the supply tube (2) and the diameter of the supply tube are chosen in such a way that the entraining force of the first fluid is sufficient for overcoming a hydrostatic force as experienced by the fibre or cable upon entering the input of the installation tube.

**17.** Method according to claim 16, **characterised in that** the supply tube include a number of n supply tube sections (2, 2'), n=1,2,..., each having an input and an output, and a fluid under pressure ($p_{p0}$) being fed near the input of each supply tube section and discharged ($p_{p1}$) near the output of each supply tube section, the pressure drop ($p_{p0}$ - $p_{p1}$) of the fluid over each supply tube section (2, 2') and the inner diameter ($D_p$) of each supply tube section are chosen in such a way that the sum of the entraining forces experienced by a fibre or cable to be installed in each of the supply sections is sufficient for overcoming a hydrostatic force as experienced by the fibre or cable upon entering the input of the installation tube.

**18.** Method according to claim 17, **characterised in that** the supply tube sections have essentially the same length and inner diameter ($D_p$), and the pressure drops applied over each supply tube section are essentially the same.

**19.** Method according to claim 17 or 18, **characterised in that** the pressure drop over a supply tube section is chosen in dependency of the inner diameter ($D_p$) of a supply tube section and of the diameter of the fibre or cable ($D_c$) to be installed, and of the pressure drop over the installation tube.

**20.** Method according to claim 17 or 18, **characterised in that** the inner diameter ($D_p$) of the supply tube sections is chosen in dependency of the pressure drop over each of the supply tube sections and the installation tube and of the diameter ($D_c$) of the fibre or cable to be installed.

**21.** Method according to any of the claims 1,-,20, **characterised in that** the fibre or cable is fed to the input of the supply tube (2) via a further installation tube (3), an output of the further installation tube being coupled to the input of the supply tube.

**22.** Device for installing optical fibres or cables (1) in a tubular section comprising a supply tube (2) and an installation tube (3), each having an input and an output, the output of the supply tube being.in connection with the input of the installation tube, there being provided means (4) near the input of the supply tube to feed a fluid under pressure ($p_{p0}$), and means to conduct the fibre or cable into the input of the supply tube, such that the fibre or cable can be propelled through the tubular section by fluid entraining forces, and, at the output of the supply tube, there being provided means (5) to discharge at least part of the fluid from the supply tube, **characterised in that** there is provided means (6) to, at the input of the installation tube, feed a further fluid, hereinafter called second fluid, under pressure ($p_0$), and that the supply tube has a length (1p) small enough to prevent that an appreciable part of propelling forces, generated as a result of the fluid entraining forces exerted by the first mentioned fluid, hereinafter called first fluid, on the fibre or cable in the supply tube, is lost to friction.

**23.** Device according to claim 22, **characterised in that** the supply tube includes n cascaded supply tube sections (2, 2'), n=1,2,..., each having an input and an output.

**24.** Device according to claim 23, **characterised in that** the means for feeding the first fluid under pressure to the cascaded supply tube sections consist of n feeding sections (4, 4').

**25.** Device according to claim 22 or 23, **characterised in that** the diameters of the supply tubes are about equal to, or greater than, $\dfrac{\left(p_{p0}-p_{p1}\right)+\left(p_0-p_a\right)/n}{\left(p_{p0}-p_{p1}\right)}$ times the diameter of the fibre or cable, $p_{p0}$-$p_{p1}$ and $P_0$-$P_a$ being the pressure drops over the supply tube sections and the installation tube, respectively.

**26.** Device according to claim 25, **characterised in that** the diameters of the supply tubes are about equal to, or greater than, (1 + 1/n) times the diameter of the fibre or cable.

**27.** Device according to any of the claims 22 to 26 inclusive, **characterised in that** the supply tube or supply tubes are mounted fixedly to the installation tube.

28. Device according to any of the claims 22 to 26 inclusive, **characterised in that** the supply tube or supply tube sections (2, 2') are located inside the means (7) for feeding, at the input of the installation tube, the second fluid under pressure.

29. Device according to claim 28, **characterised in that** the means for feeding the first fluid to the supply tube or supply tube sections are directly coupled to the inside of the means (7) for feeding the second fluid under pressure to the input of the installation tube, the first and second fluids originating from the same fluid source.

30. Device according to any of the claims 22,-,29 **characterised in that** the means to feed and to discharge the first fluid to and from the supply tube (2) include a feed tube (8) and a discharge tube (9), respectively, which tubes extend parallel to the installation tube.

31. Device according to any of the claims 22,-,29 **characterised in that** the means to feed and to discharge second fluid to and from the installation tube (3) include a feed tube (8) and a discharge tube (9), respectively, which tubes extend parallel to the installation tube.

32. Device according to any of the claims 22,-,29, **characterised in that** the device comprises a single feed tube (8) for feeding the first and second fluid to the supply tube or supply tube sections and the installation tube, respectively, and a single discharge tube (9) for discharging the first and second fluid from the supply tube or supply tube sections and the installation tube, respectively.

33. Device according to claim 32, **characterised in that** the single discharge tube (18) surrounds the single supply tube (8) and the installation tube (3).

34. Device according to claim 32, **characterised in that** the means for, at the input of the installation tube, feeding second fluid, comprise a feed tube (8) having an internal diameter which is larger than the internal diameter of the installation tube, which feed tube serves for feeding fluid to several supply tubes, which are each connected to one or more parallel installation tubes.

**Patentansprüche**

1. Verfahren zum Installieren von Lichtleitern oder Kabeln (1) in einen röhrenförmigen Abschnitt, umfassend eine Versorgungsröhre (2) und eine Installationsröhre (3), wobei jede einen Eingang und einen Ausgang hat, wobei der Ausgang der Versorgungsröhre in Verbindung mit dem Eingang der Installationsröhre steht, wobei ein unter Druck ($p_{p0}$) stehendes Fluid in der Nähe des Eingangs der Versorgungsröhre eingebracht wird, wobei der Leiter oder das Kabel in den Eingang der Versorgungsröhre geführt werden und durch mitreissende Fluidkräfte durch den röhrenförmigen Abschnitt angetrieben werden, und wobei beim Ausgang der Versorgungsröhre bei jedem Verhältnis ein Teil des Fluides von der Versorgungsröhre weggeführt wird ($p_{p1}$), **dadurch gekennzeichnet, dass** beim Eingang der Installationsröhre ein weiteres Fluid, nachfolgend zweites Fluid genannt, unter Druck ($p_0$) zugeführt wird, wobei die Länge (lp) der Versorgungsröhre klein genug ist, um zu verhindern, dass ein bemerkenswerter Teil der Antriebskräfte, die als ein Resultat der fluidantreibenden Kräfte generiert werden, die durch das zuerst genannte Fluid, nachfolgend erstes Fluid genannt, auf den Leiter oder das Kabel in der Versorgungsröhre ausgeübt werden, durch Reibung verloren geht.

2. Verfahren gemäss Anspruch 1, **dadurch gekennzeichnet, dass** die Ausgänge der Versorgungsröhre und der Installationsröhre in die gleiche Umgebung ausfliessen.

3. Verfahren gemäss Anspruch 1 oder 2, **dadurch gekennzeichnet, dass** das erste Fluid, das dem Eingang der Versorgungsröhre zugeführt wird, und das zweite Fluid, das dem Eingang der Installationsröhre zugeführt wird, durch die gleiche Fluidquelle geliefert und unter Druck gesetzt werden.

4. Verfahren gemäss Anspruch 1 oder 2, **dadurch gekennzeichnet, dass** das erste Fluid für die Versorgungsröhre aus einem Gas besteht.

5. Verfahren nach Anspruch 4, **dadurch gekennzeichnet, dass** das erste Fluid für die Versorgungsröhre aus Luft besteht.

6. Verfahren gemäss Anspruch 1 oder 2, **dadurch gekennzeichnet, dass** das erste Fluid für die Versorgungsröhre aus einer Flüssigkeit besteht.

7. Verfahren gemäss Anspruch 5, **dadurch gekennzeichnet, dass** das erste Fluid für die Versorgungsröhre aus Wasser besteht.

8. Verfahren gemäss Anspruch 5, **dadurch gekennzeichnet, dass** das erste Fluid für die Versorgungsröhre aus einer hydraulischen Flüssigkeit besteht.

9. Verfahren gemäss Anspruch 5, **dadurch gekennzeichnet, dass** das erste Fluid für die Versorgungsröhre aus einem Schmiermittel besteht.

10. Verfahren gemäss Anspruch 5, **dadurch gekennzeichnet, dass** das erste Fluid für die Versorgungsröhre aus einem zu einer Flüssigkeit komprimierten Gas besteht.

11. Verfahren gemäss einem der Ansprüche 1 bis 3, **dadurch gekennzeichnet, dass** die Drücke auf die Eingänge der Versorgungsröhre und die Installationsröhre gleich wird.

12. Verfahren gemäss Anspruch 1 oder 2, **dadurch gekennzeichnet, dass** das zweite Fluid, das durch die Installationsröhre fliesst, aus Luft besteht.

13. Verfahren gemäss Anspruch 1 oder 2, **dadurch gekennzeichnet, dass** das zweite Fluid, das durch die Installationsröhre fliesst, aus Wasser besteht.

14. Verfahren gemäss einem der Ansprüche 1 bis 3, **dadurch gekennzeichnet, dass** das Fluid, das durch die Installationsröhre fliesst, aus einem zu einer Flüssigkeit komprimiertem Gas besteht.

15. Verfahren gemäss einem der Ansprüche 1 bis 3, **dadurch gekennzeichnet, dass** der Druck beim Ende der Versorgungsröhre grösser oder gleich dem Druck beim Start der Installationsröhre ist.

16. Verfahren gemäss einem der Ansprüche 1 bis 15, **dadurch gekennzeichnet, dass** der Druckabfall ($p_{p0}$-$p_{p1}$) des ersten Fluids über die Versorgungsröhre (2) und der Durchmesser der Versorgungsröhre so gewählt sind, dass die Antriebskraft des ersten Fluids ausreichend ist, um eine hydrostatische Kraft, wie sie durch den Leiter oder das Kabel nach dem Eintreten in den Eingang der Installationsröhre erfahren wird, zu überwinden.

17. Verfahren gemäss Anspruch 16, **dadurch gekennzeichnet, dass** die Versorgungsröhre eine Anzahl von n VersorgungsAbschnitten (2, 2'), n=1,2,..., beinhaltet, wobei jeder einen Eingang und einen Ausgang hat, und ein Fluid unter Druck ($p_{p0}$) nahe des Eingangs von jedem Versorgungsröhren-Abschnitt zugeführt wird und nahe des Ausgangs von jedem Versorgungsröhren-Abschnitt weggeführt wird, wobei der Druckabfall ($p_{p0}$-$p_{p1}$) des Fluids über jeden Versorgungsröhren-Abschnitt (2, 2') und der innere Durchmesser ($D_p$) von jedem Versorgungsröhren-Abschnitt in einer Weise gewählt sind, dass die Summe der Antriebskräfte, die durch den zu installierenden Leiter oder das zu installierende Kabel erfahren werden, in jedem Versorgungsröhren-Abschnitt genügend sind, um eine hydrostatische Kraft, die durch den Leiter oder das Kabel nach dem Eintreten des Eingangs der Installationsröhre erfahren wird, zu überwinden.

18. Verfahren gemäss Anspruch 17, **dadurch gekennzeichnet, dass** die Versorgungsröhren-Abschnitte im wesentlichen die gleiche Länge und inneren Durchmesser ($D_p$) aufweisen, und dass die Druckabfälle, die über jeden Versorgungsröhren-Abschnitt angewandt werden, im wesentlichen gleich sind.

19. Verfahren gemäss Anspruch 17 oder 18, **dadurch gekennzeichnet, dass** der Druckabfall über einen Versorgungsröhren-Abschnitt in Abhängigkeit des inneren Durchmessers ($D_p$) eines Versorgungsröhren-Abschnittes und des Durchmessers des Leiters oder des Kabels ($D_c$), das installiert werden soll, und des Druckabfalls über die Installationsröhre, gewählt wird.

20. Verfahren gemäss Anspruch 17 oder 18, **dadurch gekennzeichnet, dass** der innere Durchmesser ($D_p$) der Versorgungsröhren-Abschnitte in Abhängigkeit des Druckabfalls über jeden der Versorgungsröhren-Abschnitte und der Installationsröhre und des Durchmessers ($D_c$) des Leiters oder des zu installierenden Kabels gewählt wird.

21. Verfahren gemäss einem der Ansprüche 1 bis 20, **dadurch gekennzeichnet, dass** der Leiter oder das Kabel durch den Eingang der Versorgungsröhre (2) über eine weitere Installationsröhre (3) zugeführt wird, wobei ein Ausgang der weiteren Installationsröhre zum Eingang der Versorgungsröhre gekoppelt wird.

22. Vorrichtung zum Installieren von Lichtleitern oder Kabeln (1) in einen röhrenförmigen Abschnitt, umfassend eine Versorgungsröhre (2) und eine Installationsröhre (3), wobei jede einen Eingang und einen Ausgang hat, wobei der Ausgang der Versorgungsröhre in Verbindung mit dem Eingang der Installationsröhre steht, wobei Mittel (4) nahe des Eingangs der Versorgungsröhre, um ein unter Druck ($p_{p0}$) stehendes Fluid zuzuführen, und Mittel, um den Leiter oder das Kabel in den Eingang der Versorgungsröhre zu leiten, bereitgestellt sind, so dass der Leiter oder das Kabel durch den röhrenförmigen Abschnitt durch mitreissende Fluidkräfte angetrieben werden, und wobei beim Ausgang der Versorgungsröhre Mittel (5) angeordnet sind, um mindestens ein Teil des Fluides von der Versorgungsröhre wegzuführen, **dadurch gekennzeichnet, dass** Mittel (6) vorhanden sind, um beim Eingang der Installationsröhre ein weiteres Fluid, nachfolgend zweites Fluid genannt, unter Druck ($p_0$) zuzuführen, und dass die Versorgungsröhre eine Länge (lp) hat, die klein genug ist, um zu verhindern, dass ein bemerkenswerter Teil der Antriebskräfte, die als ein Resultat der fluidantreibenden Kräfte generiert werden, die durch das zuerst genannte Fluid, nachfolgend erstes Fluid genannt, auf den Leiter oder das Kabel in der Versorgungsröhre ausgeübt werden, durch Reibung verloren geht.

23. Vorrichtung gemäss Anspruch 22, **dadurch gekennzeichnet, dass** die Versorgungsröhre n stufenförmige Versorgungsröhren-Abschnitte (2,2'), n=1,2,..., beinhaltet, wobei jede einen Eingang und einen Ausgang hat.

24. Vorrichtung nach Anspruch 23, **dadurch gekennzeichnet, dass** die Mittel zum Zuführen des ersten Fluids unter Druck zu den stufenförmigen Versorgungsabschnitten aus n Zuführ-Abschnitten (4, 4') bestehen.

25. Vorrichtung gemäss Anspruch 22 oder 23, **dadurch gekennzeichnet, dass** die Durchmesser der Versorgungsröhren etwa gleich oder grösser sind als $\dfrac{\left(p_{p0}-p_{p1}\right)+\left(p_0-p_a\right)/n}{\left(p_{p0}-p_{p1}\right)}$ mal der Durchmesser des Leiters oder des Kabels, wobei $p_{p0}$-$p_{p1}$ und $p_0$-$p_a$ die Druckabfälle über die Versorgungsröhren-Abschnitte bzw. die Installationsröhre sind.

26. Vorrichtung gemäss Anspruch 25, **dadurch gekennzeichnet, dass** die Durchmesser der Versorgungsröhren etwa gleich oder grösser als (1 + 1/n) mal der Durchmesser des Leiters oder des Kabels sind.

27. Vorrichtung gemäss einem der Ansprüche 22 bis 26, **dadurch gekennzeichnet, dass** die Versorgungsröhre oder die Versorgungsröhren fest zu der Installationsröhre fixiert sind.

28. Vorrichtung gemäss einem der Ansprüche 22 bis 26, **dadurch gekennzeichnet, dass** die Versorgungsröhre oder die Versorgungsröhren-Abschnitte (2, 2') innerhalb der Mittel (7) zur Zuführung des zweiten Fluids unter Druck beim Eingang der Installationsröhre angeordnet sind.

29. Vorrichtung gemäss Anspruch 28, **dadurch gekennzeichnet, dass** die Mittel zur Zuführung des ersten Fluids zu der Versorgungsröhre oder den Versorgungsröhren-Abschnitten direkt verbunden sind mit der Innenseite der Mittel (7) zur Zuführung des zweiten Fluids unter Druck zum Eingang der Installationsröhre, wobei das erste und das zweite Fluid von derselben Fluid-Quelle ausgehen.

30. Vorrichtung gemäss einem der Ansprüche 22 bis 29, **dadurch gekennzeichnet, dass** die Mittel, um das erste Fluid zu und von der Versorgungsröhre (2) zuzuführen bzw. wegzuführen, eine Zuführröhre (8) bzw. eine Wegführröhre (9) beinhalten, welche Röhren parallel zur Installationsröhre verlaufen.

31. Vorrichtung gemäss einem der Ansprüche 22 bis 29, **dadurch gekennzeichnet, dass** die Mittel um das zweite Fluid zu und von der Installationsröhre (3) zuzuführen bzw. wegzuführen eine Zuführröhre (8) bzw. eine Wegführröhre (9) beinhalten, welche Röhren parallel zur Installationsröhre verlaufen.

32. Vorrichtung gemäss einem der Ansprüche 22 bis 29, **dadurch gekennzeichnet, dass** die Vorrichtung eine einzelne Zuführröhre (8) zum Zuführen des ersten und des zweiten Fluids zu der Versorgungsröhre und den Versorgungsröhren-Abschnitten, bzw. der Installationsröhre umfasst, und eine einzelne Wegführröhre (9) zum Wegführen des ersten und zweiten Fluids von der Versorgungsröhre oder den Versorgungsröhren-Abschnitten, bzw. der Installationsröhre, umfasst.

33. Vorrichtung gemäss Anspruch 32, **dadurch gekennzeichnet, dass** die einzelne Wegführröhre (18) die einzelne Versorgungsröhre (8) und die Installationsröhre (3) umschliesst.

34. Vorrichtung gemäss Anspruch 32, **dadurch gekennzeichnet, dass** die Mittel zur Zuführung des zweiten Fluids beim Eingang der Installationsröhre eine Zuführröhre (8) umfassen, mit einem Innendurchmesser, welcher grösser ist als der Innendurchmesser der Installationsröhre, welche Zuführröhre der Zufuhr eines Fluids zu verschiedenen Versorgungsröhren dient, welche zu einer oder mehreren parallelen Installationsröhren verbunden werden.

**Revendications**

1. Procédé pour installer des fibres optiques ou des câbles (1) dans une section tubulaire comprenant un tube d'amenée (2) et un tube d'installation (3), chacun ayant une entrée et une sortie, la sortie du tube d'amenée étant connectée avec l'entrée du tube d'installation, un fluide sous pression ($P_{p0}$) étant transmis près de l'entrée du tube d'amenée, la fibre ou le câble étant conduits dans l'entrée du tube d'amenée et étant propulsés par les forces d'entraînement du fluide à travers la section tubulaire, et à la sortie du tube d'amenée, à n'importe quelle vitesse, une partie du fluide étant évacuée ($P_{p1}$) du tube d'amenée,
**caractérisé en ce que**, à l'entrée du tube d'installation, un autre fluide, dans la suite de la présente appelé second fluide, sous une pression ($p_0$) est transmis, la longueur ($1_p$) du tube d'amenée étant suffisamment petite pour empêcher qu'une partie appréciable des forces motrices, générées comme résultat des forces d'entraînement fluides exercées par le premier fluide mentionné, appelé premier fluide dans la suite de la présente, sur la fibre ou le câble dans le tube d'amenée, soit perdue par friction.

2. Procédé selon la revendication 1, **caractérisé en ce que** les sorties du tube d'amenée et du tube d'installation s'écoulent dans le même environnement.

3. Procédé selon la revendication 1 ou la revendication 2, **caractérisé en ce que** le premier fluide transmis à l'entrée du tube d'amenée et le second fluide transmis à l'entrée du tube d'installation sont délivrés et pressurisés par la même source de fluide.

4. Procédé selon la revendication 1 ou la revendication 2, **caractérisé en ce que** le premier fluide destiné au tube d'amenée consiste en un gaz.

5. Procédé selon la revendication 4, **caractérisé en ce que** le premier fluide destiné au tube d'amenée consiste en de l'air.

6. Procédé selon la revendication 1 ou la revendication 2, **caractérisé en ce que** le premier fluide destiné au tube d'amenée consiste en un liquide.

7. Procédé selon la revendication 5, **caractérisé en ce que** le premier fluide destiné au tube d'amenée consiste en de l'eau.

8. Procédé selon la revendication 5, **caractérisé en ce que** le premier fluide destiné au tube d'amenée consiste en un liquide hydraulique.

9. Procédé selon la revendication 5, **caractérisé en ce que** le premier fluide destiné au tube d'amenée consiste en un lubrifiant.

10. Procédé selon la revendication 5, **caractérisé en ce que** le premier fluide destiné au tube d'amenée consiste en un gaz compressé en un liquide.

11. Procédé selon l'une quelconque des revendications 1 à 3, **caractérisé en ce que** les pressions sur les entrées du tube d'amenée et du tube d'installation sont égales.

15

**12.** Procédé selon la revendication 1 ou la revendication 2, **caractérisé en ce que** le second fluide s'écoulant à travers le tube d'installation consiste en de l'air.

**13.** Procédé selon la revendication 1 ou la revendication 2, **caractérisé en ce que** le second fluide s'écoulant à travers le tube d'installation consiste en de l'eau.

**14.** Procédé selon l'une quelconque des revendications 1 à 3, **caractérisé en ce que** le fluide s'écoulant à travers le tube d'installation consiste en un gaz compressé en un liquide.

**15.** Procédé selon l'une quelconque des revendications 1 à 3, **caractérisé en ce que** la pression à l'extrémité du tube d'amenée est supérieure, ou égale, à la pression au début du tube d'installation.

**16.** Procédé selon l'une quelconque des revendications 1 à 15, **caractérisé en ce que** la chute de pression ($P_{p0}$ - $P_{p1}$) du premier fluide dans le tube d'amenée (2) et le diamètre du tube d'amenée sont choisis de telle manière que la force d'entraînement du premier fluide est suffisante pour surmonter une force hydrostatique telle que celle subie par la fibre ou le câble quand ils pénètrent dans l'entrée du tube d'installation.

**17.** Procédé selon la revendication 16, **caractérisé en ce que** le tube d'amenée comprend un nombre n de sections de tube d'amenée (2, 2'), n=1, 2, ..., chacune ayant une entrée et une sortie, et un fluide sous pression ($P_{p0}$) étant transmis près de l'entrée de chaque section de tube d'amenée et évacué ($P_{p1}$) près de la sortie de chaque section de tube d'amenée, la chute de pression ($P_{p0}$-$P_{p1}$) du fluide sur chaque section de tube d'amenée (2, 2') et le diamètre interne ($D_p$) de chaque section de tube d'amenée sont choisis de telle manière que la somme des forces d'entraînement subies par une fibre ou un câble pour être installés dans chacune des sections d'amenée est suffisante pour surmonter une force hydrostatique telle que celle subie par la fibre ou le câble quand ils pénètrent dans l'entrée du tube d'installation.

**18.** Procédé selon la revendication 17, **caractérisé en ce que** les sections de tube d'amenée ont essentiellement la même longueur et le même diamètre interne ($D_p$), et **en ce que** les chutes de pression appliquées sur chaque section de tune d'amenée sont essentiellement les mêmes.

**19.** Procédé selon la revendication 17 ou la revendication 18, **caractérisé en ce que** la chute de pression sur une section de tube d'amenée est choisie en lien avec le diamètre interne ($D_p$) d'une section de tube d'amenée et le diamètre de la fibre ou du câble ($D_c$) à installer, et avec la chute de pression sur le tube d'installation.

**20.** Procédé selon la revendication 17 ou la revendication 18, **caractérisé en ce que** le diamètre interne ($D_p$) des sections de tube d'amenée est choisi en lien avec la chute de pression sur chacune des sections de tube d'amenée et du tube d'installation et avec le diamètre ($D_c$) de la fibre ou du câble à installer.

**21.** Procédé selon l'une quelconque des revendications 1 à 20, **caractérisé en ce que** la fibre ou le câble est transmis à l'entrée du tube d'amenée (2) via un autre tube d'installation (3), une sortie de l'autre tube d'installation étant couplée à l'entrée du tube d'amenée.

**22.** Dispositif pour installer des fibres optiques ou des câbles (1) dans une section tubulaire comprenant un tube d'amenée (2) et un tube d'installation (3), chacun ayant une entrée et une sortie, la sortie du tube d'amenée étant connectée avec l'entrée du tube d'installation, un moyen (4) étant pourvu à proximité de l'entrée du tube d'amenée pour transmettre un fluide sous pression ($P_{p0}$), et un moyen étant pourvu pour conduire la fibre ou le câble dans l'entrée du tube d'amenée, de sorte que la fibre ou le câble puissent être propulsés par les forces d'entraînement fluides à travers la section tubulaire, et, à la sortie du tube d'amenée, un moyen (5) étant pourvu pour évacuer au moins une partie du fluide depuis le tube d'amenée, **caractérisé en ce qu'**il est pourvu un moyen (6) pour, à l'entrée du tube d'installation, transmettre un autre fluide, dans la suite de la présente appelé second fluide, sous pression ($p_0$), et **en ce que** le tube d'amenée a une longueur ($l_p$) étant suffisamment petite pour empêcher qu'une partie appréciable des forces motrices, générées comme résultat des forces d'entraînement fluides exercées par le premier fluide mentionné, appelé premier fluide dans la suite de la présente, sur la fibre ou le câble dans le tube d'amenée, soit perdue par friction.

**23.** Dispositif selon la revendication 22, **caractérisé en ce que** le tube d'amenée comprend n sections de tube d'amenée en cascade (2, 2'), n = 1, 2..., chacune ayant une entrée et une sortie.

**24.** Dispositif selon la revendication 23, **caractérisé en ce que** le moyen pour transmettre le premier fluide sous pression aux sections de tube d'amenée en cascade consiste en n sections d'amenée (4, 4').

**25.** Dispositif selon la revendication 22 ou la revendication 23, **caractérisé en ce que** les diamètres des tubes d'amenée sont environ égaux, ou supérieurs, à $\dfrac{\left(p_{p0} - p_{p1}\right) + \left(p_0 - p_a\right)/n}{\left(p_{p0} - p_{p1}\right)}$ fois le diamètre de la fibre ou du câble,

$p_{p0}$-$p_{p1}$ et $p_0$-$p_a$ étant les chutes de pression sur les sections de tube d'amenée et sur le tube d'installation, respectivement.

**26.** Dispositif selon la revendication 25, **caractérisé en ce que** les diamètres des tubes d'amenée sont environ égaux, ou supérieurs, à (1 + 1/n) fois le diamètre de la fibre ou du câble.

**27.** Dispositif selon l'une quelconque des revendications 22 à 26, **caractérisé en ce que** le tube d'amenée ou les tubes d'amenée sont montés de manière fixe sur le tube d'installation.

**28.** Dispositif selon l'une quelconque des revendications 22 à 26, **caractérisé en ce que** le tube d'amenée ou les sections de tube d'amenée (2, 2') sont situés à l'intérieur du moyen (7) pour transmettre, à l'entrée du tube d'installation, le second fluide sous pression.

**29.** Dispositif selon la revendication 28, **caractérisé en ce que** le moyen pour transmettre le premier fluide au tube d'amenée ou aux sections de tube d'amenée est directement couplé à l'intérieur du moyen (7) pour transmettre le second fluide sous pression à l'entrée du tube d'installation, les premier et second fluides provenant de la même source de fluide.

**30.** Dispositif selon l'une quelconque des revendications 22 à 29, **caractérisé en ce que** le moyen pour transmettre et pour évacuer le premier fluide vers et depuis le tube d'amenée (2) comprend un tube d'alimentation (8) et un tube de décharge (9), respectivement, lesquels tubes s'étendent parallèlement au tube d'installation.

**31.** Dispositif selon l'une quelconque des revendications 22 à 29, **caractérisé en ce que** le moyen pour transmettre et pour évacuer le second fluide vers et depuis le tube d'installation (3) comprend un tube d'alimentation (8) et un tube de décharge (9), respectivement, lesquels tubes s'étendent parallèlement au tube d'installation..

**32.** Dispositif selon l'une quelconque des revendications 22 à 29, **caractérisé en ce que** le dispositif comprend un unique tube d'alimentation (8) pour transmettre le premier et le second fluides au tube d'amenée ou aux sections de tube d'amenée et au tube d'installation, respectivement, et un unique tube de décharge (9) pour évacuer le premier et le second fluides du tube d'amenée ou des sections de tube d'amenée et du tube d'installation, respectivement.

**33.** Dispositif selon la revendication 32, **caractérisé en ce que** le tube de décharge unique (18) entoure le tube d'alimentation unique (8) et le tube d'installation (3).

**34.** Dispositif selon la revendication 32, **caractérisé en ce que** le moyen pour transmettre le second fluide, au niveau de l'entrée du tube d'installation, comprend un tube d'alimentation (8) ayant un diamètre interne qui est plus grand que le diamètre interne du tube d'installation, lequel tube d'alimentation sert pour alimenter en fluide plusieurs tubes d'amenée, lesquels sont chacun connectés à un ou plusieurs tubes d'installation parallèles.

FIG. 1

FIG. 2

FIG. 3

FIG. 4

$p_{pi}$   $p_{pi}$  $p_0$

FIG. 5

FIG. 6

FIG. 7

FIG. 8

FIG. 9

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0108590 A
- EP 0292037 A
- EP 0345043 A
- EP 0287225 A
- JP 03018206 A

- EP 0108950 A
- EP 0318280 A
- EP 0508016 A
- EP 0785387 A

**Non-patent literature cited in the description**

- *PATENT ABSTRACTS OF JAPAN,* 09 April 1991, vol. 015, 139 (E-1053